# EUROPEAN PATENT SPECIFICATION

(11) **EP 1 299 505 B1**
(45) Date of publication and mention of the grant of the patent: **26.11.2003**
(21) Application number: 01962849.4
(22) Date of filing: 10.07.2001
(51) Int. Cl.: C10G 11/18, B01J 8/00, B01J 8/26

(54) **STANDPIPE INLET FOR ENHANCING PARTICULATE SOLIDS CIRCULATION FOR PETROCHEMICAL AND OTHER PROCESSES**
STANDROHR-EINLASS FUER ZIRKULATION VON PARTIKELFÖRMIGEN FESTSTOFFEN FÜR PETROCHEMISCHE ODER ANDERE PROZESSE
ENTREE DE COLONNE MONTANTE PERMETTANT D'AMELIORER LA CIRCULATION DE PARTICULES SOLIDES DANS DES PROCESSUS PETROCHIMIQUES ET AUTRES

(30) Priority: 12.07.2000 US 614978
(43) Date of publication of application: 09.04.2003
(73) Proprietor: SHELL INTERNATIONALE RESEARCH MAATSCHAPPIJ B.V., 2596 HR Den Haag (NL)
(72) Inventor: CHEN, Ye-Mon, Sugar Land, TX 77479 (US)
(86) International application number: EP0107939
(87) International publication number: WO02004576

(56) References cited:
- EP-A- 1 016 444
- US-A- 5 110 323

## Description

The invention is directed to a fluid-particulate solids process unit comprising:
a main fluidized bed vessel with particulate solids;
a withdrawal well spaced from said main fluidized bed vessel;
a downwardly inclined standpipe having its upper end fluidly connected to said main fluidized bed vessel, and its lower end fluidly connected to said particulate solids withdrawal well;
a standpipe for receiving particulate solids from said particulate solids withdrawal well, said standpipe having an open upper end fluidly connected to said particulate solids withdrawal well.

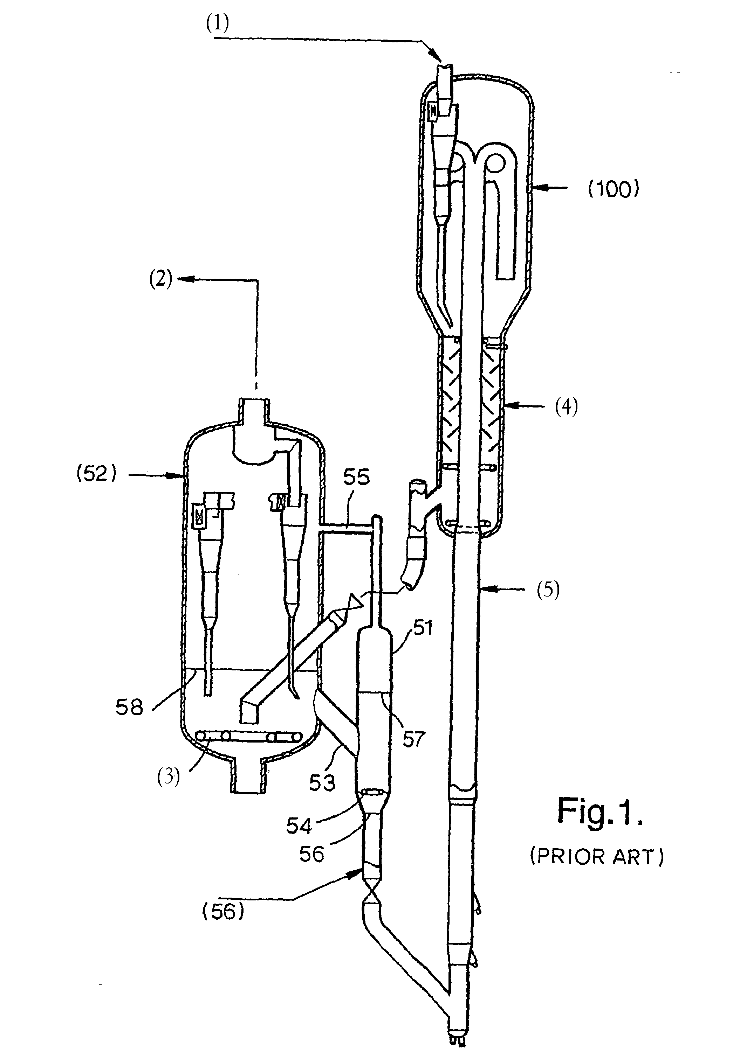

Such a fluid particulate solids process unit is for example described in Figures 1-17, 1-21 and 1-22 as published in "Fluid Catalytic Cracking Technology and Operation" by Joseph W. Wilson, PennWell Publishing Company, Tulsa Oklahoma (US), 1997, pages 32-39. Figure 1-17 illustrates the Lummus Fluid Catalytic Cracking (FCC) design and Figures 1-21 and 1-22 illustrate the Stone & Webster/IFP FCC design. Such a Fluid Catalytic Cracking (FCC) process consists of a regenerator, a riser reactor vessel and a stripper vessel. Finely divided regenerated particulate solids leaves the regenerator and contacts with a hydrocarbon feedstock in a lower portion of the reactor riser via a regenerator standpipe. Hydrocarbon feedstock and steam enter the riser through feed nozzles. The mixture of feed, steam and regenerated particulate solids, which has a temperature of from about 200 °C to about 700 °C, passes up through the riser reactor, converting the feed into lighter products while a coke layer deposits on particulate solids surface. The hydrocarbon vapors and particulate solids from the top of the riser are then passed through cyclones to separate spent particulate solids from the hydrocarbon vapor product stream. The spent particulate solids enters the stripper vessel where steam is introduced to remove hydrocarbon products from the particulate solids. Stripping is performed in a fluidized bed wherein steam is used as fluidization gas. The spent particulate solids containing coke then passes through a stripper standpipe to enter the regenerator vessel where, in the presence of air and at a temperature of from about 620 °C to about 760 °C, combustion of the coke layer produces regenerated particulate solids and flue gas. Regeneration is performed in a fluidized bed wherein air is used as fluidization medium. The flue gas is separated from entrained particulate solids in the upper region of the regenerator by cyclones and the regenerated particulate solids is returned to the regenerator fluidized bed. The regenerated particulate solids is then drawn from the regenerator fluidized bed via the withdrawal well and the regenerator standpipe and, in repetition of the previously mentioned cycle, contacts the feedstock in the reaction zone.

The withdrawal well is spaced from the regenerator vessel. Through a downwardly inclined standpipe, having its upper end fluidly connected to the fluidized bed in the regenerator vessel and its lower end fluidly connected to said particulate solids withdrawal well, regenerated particulate solids is drawn from the regenerator. The withdrawal vessel is fluidly connected at its lower end to the actual regenerator standpipe having an open upper end for receiving particulate solids from said lower end of the particulate solids withdrawal well. This regenerator standpipe transports the particulate solids to the reactor riser.

According to the open literature, such as the paper entitled "Controlling Gas Flow in Standpipe Systems" by T. A. Gauthier and J. L. Ross presented at the 1998 Annual meeting of the AIChE, the key concept of the withdrawal well is not to withdraw particulate solids directly from the main regenerator vessel, which is highly fluidized with a density in the range of 20 to 40 lb/ft³ with the presence of many rising gas bubbles, because excess gas (bubbles) would enter the regenerator standpipe. A key concept, according to Gauthier and Ross, is that the flow of particulate solids from the regenerator into the withdrawal well should be slow enough for bubbles to rise in the withdrawal well. The gas in the withdrawal well can flow back to the regenerator via a vent line fluidly connected to the regenerator. The particulate solids condition in the withdrawal well is controlled independently by fluidization injection. Another key concept of the withdrawal well, according to Gauthier and Ross, is to reach an ideal condition for the particulate solids near minimum bubbling condition when entering the regenerator standpipe.

However, reaching such an ideal condition for the particulate solids in the withdrawal well is difficult using the prior art configuration. According to T. A. Gauthier and J. L. Ross's paper, under certain conditions the withdrawal well could lead to partial de-fluidization and poor particulate solids circulation. The de-fluidization is due, at least in part, to the fluidization injection being located close to the standpipe inlet at the lower end of the withdrawal well. When part of the fluidization gas emitted from fluidization injection is drawn into the regenerator standpipe by the particulate solids circulation, the withdrawal well could partially lose its fluidization, or become partially de-fluidized, which leads to particulate solids circulation difficulty.

One of applicants FCC units originally had such a withdrawal well of the prior art. This FCC unit had experienced difficulties in maintaining stable particulate solids circulation due to standpipe instability. The standpipe instability was most severe not only at high particulate solids circulation rates but also at low rates. During four years, this FCC unit experienced standpipe operational problems, which led to several unit feed outages and disruptions to the entire refinery. In addition, the standpipe instability was very sensitive to the change of the regenerator bed level, which severely restricted the flexibility of the FCC operation.

Relating problems regarding standpipe inlet geometry and particulate solids circulation have been identified for the stripper of a FCC unit. It is common practice that the stripper includes special trays, such as shown in the invention by Johnson et al in WO-A-9604353. The special trays in the main vessel enhance the efficiency of hydrocarbon vapor stripping by steam. The spent particulate solids is then transported to the regenerator through a stripper standpipe with a hopper inlet as shown in the prior art. The hopper inlet for the stripper standpipe has been shown to be rather ineffective in reducing gas entrainment. The study of Nougier et al in the Second FCC Forum (May 15-17, 1996, The Woodlands, Texas) shows that, even after intensive stripping in the main vessel, the vapor leaving the stripper still contains 20 to 25% by mole (or about 40% by weight) of hydrocarbon products. Gas entrainment from the stripper standpipe into the regenerator has two negative impacts in addition to the impact on particulate solids circulation discussed above. First, the entrained gas from the stripper to the regenerator represents a loss in hydrocarbon products, which could have been recovered as products. Second, the entrained hydrocarbon has to be burned in the regenerator, which consumes limited air available in the regenerator and generates additional heat that has to be removed. Thus, it is essential to reduce gas entrainment into the stripper standpipe.

The aim of the present invention is to provide a more stable particle withdrawal means for a fluidized bed, which does not have the above described disadvantages. This aim is achieved with the following Hydrocarbon process unit.

Hydrocarbon process unit comprising:
a main fluidized bed vessel with particulate solids;
a withdrawal well spaced from said main fluidized bed vessel;
a downwardly inclined standpipe having its upper end fluidly connected to said main fluidized bed vessel, and its lower end fluidly connected to said particulate solids withdrawal well;
a standpipe for receiving particulate solids from said particulate solids withdrawal well, said standpipe having an open upper end fluidly connected to said particulate solids withdrawal well, wherein the particulate solids withdrawal well is provided with a closed lower end (floor), through which lower end an inlet portion of said standpipe extends into said particulate solids withdrawal well from below for receiving and transporting said particulate solids from said particulate solids withdrawal well, said extended standpipe inlet portion including an open upper end and a plurality of openings cut through the wall of said extended standpipe below said open upper end and above the closed lower end (floor) of said particulate solids withdrawal well.

Applicants found that the unit according to the present invention shows a reduced gas entrainment into standpipes. This leads to increases in overall pressure build-up in the standpipe and particulate solids circulation rate as well as improving standpipe stability. The reduction in gas entrainment will also reduce hydrocarbon entrainment from for example an FCC stripper vessel to the regenerator of an FCC unit. Furthermore the particulate solids circulation of the unit provided with a prior art regenerator withdrawal well can be improved by retrofitting the withdrawal well to a design according to the present invention. This is very well illustrated in applicants earlier referred to FCC unit. Since installation of the modifications with the instant invention applicants FCC unit has been running in a stable mode in the entire range of particulate solids circulation rates, which is quite different from the previous operational experience with the prior art configuration. There has been no instance of feed outage caused by standpipe instability since modification of the FCC with the instant invention. In addition, the highest particulate solids circulation rate has been increased by 15%, compared to before. The unit also became less sensitive to the change of regenerator level, which allows the unit to operate in a wider range of conditions.

The particulate solids withdrawal well of the unit according to the present invention is provided with a closed lower end, also referred to as floor, through which lower end an inlet portion of said standpipe extends into said particulate solids withdrawal well. Because the, suitably tubular, standpipe has a smaller diameter than the, suitably tubular, withdrawal well vessel an annular space is defined between the standpipe inlet portion extending into the well vessel and the inner well vessel wall. Said extended standpipe inlet portion includes an open upper end and a plurality of openings. The openings are preferably slots and more preferably vertical slots. The number of elongated slot openings could be in the range of one to twenty, but is preferably in the range of two to eight. The total flowing area of the elongated slot openings could be in the range of 20% to 800% of the area of the open upper end of the standpipe, but is preferably in the range of 50% to 400%.

The withdrawal well preferably further includes means for injecting fluidizing gas at a location above said floor of said particulate solids withdrawal well for maintaining fluidization of the particulate solids in the withdrawal well. Such means preferably includes at least one gas injection ring. Preferably a gas injection ring is located at a level near the open upper end of the extended standpipe inlet. The upward fluidization velocity emitted from such a means for injecting fluidizing gas, based on the cross-sectional area of the withdrawal well at its largest diameter, could be in the range of 0.015-1.22 m/s (0.05 to 4 feet/sec), but is preferably in the range of 0.06-0.61 m/s (0.2 to 2 feet/sec). The downward fluidization velocity emitted from the means for injecting fluidizing gas, based on the largest cross-sectional area of the withdrawal well, could be in the range of 0-0.61 m/s (0 to 2 feet/sec), but is preferably in the range of 0.006-0.3 m/s (0.02 to 1 feet/sec).

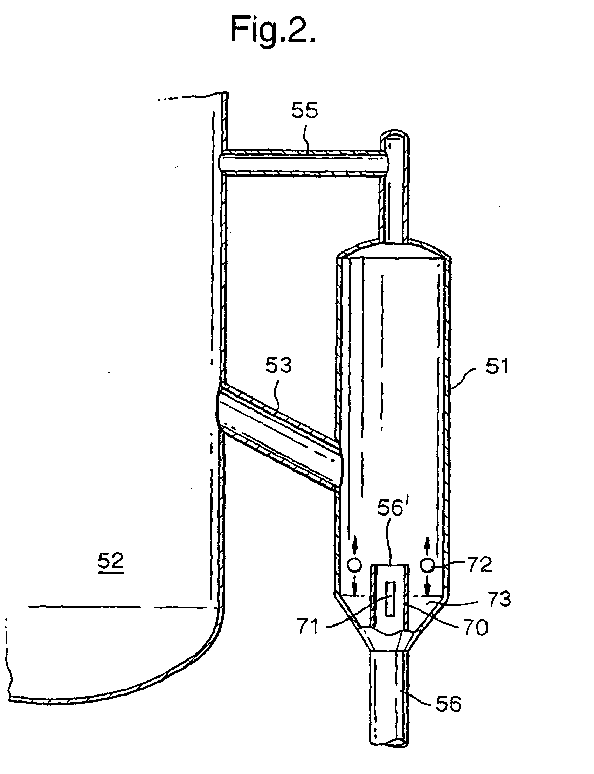

The invention will be further described by making use of Figures 1 and 2.

FIGURE 1 shows a prior art FCC unit provided with a regenerator withdrawal well.

FIGURE 2 shows the instant invention which comprises a modification of the standpipe inlet to the prior art configuration of Figure 2.

Figure 1 shows a withdrawal well 51 located beside regenerator 52. The withdrawal well 51 is a much smaller vessel compared to the regenerator 52. The withdrawal well 51 connects to the main regenerator 52 via an inclined standpipe 53 to allow particulate solids to flow from the regenerator 52 to the withdrawal well 51. The overhead of the withdrawal well 51 is connected to the regenerator 52 via a vent line 55 to allow gas in the withdrawal well 51 to flow back to the dilute phase of the regenerator vessel above the regenerator 52 fluidized bed 58. The regenerator standpipe 56 is connected to the bottom of the withdrawal well 51 to allow particulate solids to be transferred to the reactor 100 in the usual manner. The withdrawal well has its own fluidization injection 54 near the bottom of the withdrawal well 51 and close to the inlet 56' of regenerator standpipe 56. The fluidization injection 54 controls the fluidization condition of the withdrawal well 51 and maintains a fluidized bed level 57, which is lower than the regenerator bed level 58. The difference in elevation between the regenerator bed level 58 and the withdrawal well bed level 57 allows particulate solids to flow through the inclined standpipe pipe 53. The following features also appear in Figure 1: Product Vapors (1), Flue Gas (2), Air Ring (3), stripper (4) and Reactor Riser (5).

Figure 2 shows the regenerator withdrawal well 51 of Figure 1 as modified by the instant invention. As shown in Figure 2, the regenerator 52, the inclined standpipe 53, the vent line 55 connecting the regenerator 52 to the withdrawal well 51 and the regenerator standpipe 56 remain the same as shown in Figure 1. The modifications provided by the instant invention include an extended standpipe section 70, which extends into the withdrawal well 51, and a new fluidization injection 72 located close to the upper end of the extended standpipe section 70. The extended standpipe section 70 has a smaller diameter than the internal diameter of the withdrawal well defining an annular space 73. The extended standpipe 70 has an open upper end 56' inside the withdrawal well, near the level of the fluidization injection 72, to allow fluidized particulate solids to flow into standpipe 56. In addition, the extended standpipe 70 also includes a plurality of vertically arranged elongated slot openings 71, at a level near or below the fluidization injection 72, to provide additional passages for particulate solids to flow into standpipe 56. The fluidization injection 72 may include one or a plurality of gas injection conduits, which have a plurality of nozzles injecting fluidization gas both upward and downward. The fluidization injection 72 of the instant invention is located at a higher elevation compared to the fluidization injection 54 in Figure 1 (prior art). The combination of the fluidization injection 72 and the extended standpipe section 70 having a plurality of elongated slots 71 reduces gas entrainment into the standpipe 56, thus allowing withdrawal well 51 to maintain a fluidized condition at all time. This assures smooth particulate solids circulation.

The standpipe inlet design of the instant invention can be advantageously be applied to the withdrawal well of the prior art. Additionally stripper standpipes may be modified with a withdrawal well according to the present invention. The advantages summarized are:
More Stable Operation - The inlet design of the instant invention eliminates the problems of local de-fluidization of the original withdrawal well of the prior art. This leads to a more stable particulate solids flow at all conditions.
More flexibility - The standpipe operation is no longer sensitive to the regenerator bed level which gives more flexibility to operate the unit.
Higher particulate solids circulation - The modification has shown to lead to 15% higher particulate solids circulation.

The invention is especially directed to a hydrocarbon process unit, wherein the main fluidized bed vessel is a stripper and/or regenerator vessel of a fluid catalytic cracking (FCC) unit. Although the above discussion focuses on the applications of the instant invention in FCC units, a similar standpipe inlet design can also be applied to improve circulation of particulate solids and reduce gas entrainment in other (petro)chemical processes which employ a fluidized bed, such as fluid cokers and flexicokers, and processes other than petrochemical, such as circulating fluidized bed combustors, where large quantities of particulate solids are circulated between different vessels connected by standpipes and risers.

## Claims

1. Fluid particulate solids process unit comprising:
a main fluidized bed vessel with particulate solids;
a withdrawal well spaced from said main fluidized bed vessel;
a downwardly inclined standpipe having its upper end fluidly connected to said main fluidized bed vessel, and its lower end fluidly connected to said particulate solids withdrawal well;
a standpipe for receiving particulate solids from said particulate solids withdrawal well, said standpipe having an open upper end fluidly connected to said particulate solids withdrawal well, wherein the particulate solids withdrawal well is provided with a closed lower end (floor), through which lower end an inlet portion of said standpipe extends into said particulate solids withdrawal well from below for receiving and transporting said particulate solids from said particulate solids withdrawal well, said extended standpipe inlet portion including an open upper end and a plurality of openings cut through the wall of said extended standpipe below said open upper end and above the closed lower end (floor) of said particulate solids withdrawal well.

2. Fluid particulate solids process unit according to claim 1, wherein said plurality of openings are vertical slots.

3. Fluid particulate solidsprocess unit according to any one of claims 1-2, wherein the withdrawal well further including means for injecting fluidizing gas above said floor of said particulate solids withdrawal well for maintaining fluidization of said particulate solids in said particulate solids withdrawal well.

4. Fluid particulate solids process unit according to claim 3 wherein said means for injecting fluidizing gas includes at least one gas injection ring.

5. Fluid particulate solids process unit according to claim 4, wherein said at least one gas injection ring is located at a level near said open upper end of said extended standpipe inlet.

6. Fluid particulate solids process unit according to any one of claims 1-5, wherein the main fluidized bed vessel is a stripper vessel of a fluid catalytic cracking unit.

7. Fluid particulate solids process unit according to any one of claims 1-5, wherein the main fluidized bed vessel is a regenerator vessel of a fluid catalytic cracking unit.

## Patentansprüche

1. Prozeßeinheit für fluide partikelförmige Feststoffe mit:
einem Gefäß für ein Hauptwirbelbett mit partikelförmigen Feststoffen;
einem Abzugschacht, der mit Abstand von dem Gefäß für das Hauptwirbelbett angeordnet ist;
einem nach unten geneigten Standrohr, dessen oberes Ende in Fluidverbindung mit dem Gefäß für das Hauptwirbelbett steht, und dessen unteres Ende in Fluidverbindung mit dem Abzugschacht für partikelförmige Feststoffe steht;
einem Standrohr zur Aufnahme der partikelförmigen Feststoffe aus dem Abzugschacht für partikelförmige Feststoffe, wobei das Standrohr ein offenes oberes Ende hat, das in Fluidverbindung mit dem Abzugschacht für partikelförmige Feststoffe steht, wobei der Abzugschacht für partikelförmige Feststoffe mit einem geschlossenen unteren Ende (Boden) versehen ist, durch welches untere Ende sich ein Einlaßteil des Standrohres in den Abzugschacht für partikelförmige Feststoffe von unten her zur Aufnahme und zum Transport der partikelförmigen Feststoffe aus dem Abzugschacht für partikelförmige Feststoffe hineinerstreckt,
wobei der verlängerte Standrohreinlaßteil ein oberes Ende und eine Vielzahl von Öffnungen hat, die durch die Wand des verlängerten Standrohres unterhalb des offenen oberen Endes und oberhalb des geschlossenen unteren Endes (Boden) des Abzugschachtes für partikelförmige Feststoffe geschnitten sind.

2. Prozeßeinheit für fluide partikelförmige Feststoffe nach Anspruch 1, bei welcher die Vielzahl von Öffnungen vertikale Schlitze sind.

3. Prozeßeinheit für fluide partikelförmige Feststoffe nach Anspruch 1 oder 2, bei welcher der Abzugschacht ferner Mittel zum Einblasen von Fluidisiergas oberhalb des Bodens des Abzugschachtes für partikelförmige Feststoffe aufweist, um eine Fluidisierung der partikelförmigen Feststoffe in dem Abzugschacht für partikelförmige Feststoffe aufrechtzuerhalten.

4. Prozeßeinheit für fluide partikelförmige Feststoffe nach Anspruch 3, bei welcher die Mittel zum Einblasen von Fluidisiergas zumindest einen Gaseinblasring aufweisen.

5. Prozeßeinheit für fluide partikelförmige Feststoffe nach Anspruch 4, bei welcher der zumindest eine Gaseinblasring auf einem Niveau nahe dem oberen offenen Ende des verlängerten Standrohreinlasses angeordnet ist.

6. Prozeßeinheit für fluide partikelförmige Feststoffe nach einem der Ansprüche 1-5, bei welcher das Gefäß für das Hauptwirbelbett ein Strippergefäß einer fluidkatalytischen Crackeinheit ist.

7. Prozeßeinheit für fluide partikelförmige Feststoffe nach einem der Ansprüche 1-5, bei welcher das Gefäß für das Hauptwirbelbett ein Regeneratorgefäß einer fluidkatalytischen Crackeinheit ist.

## Revendications

1. Unité de traitement de fluides contenant des solides en particules comprenant:
une cuve principale à lit fluidisé qui présente des solides en particules,
un puits d'extraction situé à distance de ladite cuve principale à lit fluidisé,
une colonne inclinée vers le bas dont l'extrémité supérieure est en communication d'écoulement avec ladite cuve principale à lit fluidisé et dont l'extrémité inférieure est en communication d'écoulement avec ledit puits d'extraction de solides en particules,
une colonne qui permet de recevoir les solides en particules dudit puits d'extraction de solides en particules, ladite colonne présentant une extrémité supérieure ouverte qui est en communication d'écoulement avec ledit puits d'extraction de solides en particules, dans laquelle le puits d'extraction de solides en particules est muni d'une extrémité inférieure fermée (le fond), laquelle extrémité inférieure permet à une partie d'admission de ladite colonne de s'étendre dans ledit puits d'extraction de solides en particules depuis le fond pour recevoir et transporter lesdits solides en particules qui proviennent dudit puits d'extraction de solides en particules, ladite partie d'admission de la colonne allongée comprenant une extrémité supérieure ouverte et une pluralité d'ouvertures ménagées dans la paroi de ladite colonne allongée en dessous de ladite extrémité supérieure ouverte et au-dessus de l'extrémité inférieure fermée (le fond) dudit puits d'extraction de solides en particules.

2. Unité de traitement de fluides contenant des solides en particules selon la revendication 1, dans laquelle ladite pluralité d'ouvertures sont des fentes verticales.

3. Unité de traitement de fluides contenant des solides en particules selon l'une quelconque des revendications 1 à 2, dans laquelle le puits d'extraction comprend en outre un moyen pour injecter un gaz de fluidisation au-dessus dudit fond dudit puits d'extraction de solides en particules pour maintenir la fluidisation desdits solides en particules dans ledit puits d'extraction de solides en particules.

4. Unité de traitement de fluides contenant des solides en particules selon la revendication 3, dans laquelle ledit moyen pour injecter un gaz de fluidisation comprend au moins un anneau d'injection de gaz.

5. Unité de traitement de fluides contenant des solides en particules selon la revendication 4, dans laquelle l'anneau d'injection de gaz au moins présent est situé à un niveau proche de ladite extrémité supérieure ouverte de ladite admission de la colonne allongée.

6. Unité de traitement de fluides contenant des solides en particules selon l'une quelconque des revendications 1 à 5, dans laquelle la cuve principale à lit fluidisé est une cuve de séparation d'une unité de craquage catalytique de fluide.

7. Unité de traitement de fluides contenant des solides en particules selon l'une quelconque des revendications 1 à 5, dans laquelle la cuve principale à lit fluidisé est une cuve de régénérateur d'une unité de craquage catalytique de fluide.
